# FASCICULE DE BREVET EUROPEEN

(11) **EP 0 961 924 B1**
(45) Date de publication et mention de la délivrance du brevet: **27.08.2003**
(21) Numéro de dépôt: 98912550.5
(22) Date de dépôt: 26.02.1998
(51) Int. Cl.: G01N 5/00, G01N 25/04, G01N 33/28

(54) **PROCEDE DE DETERMINATION DE LA STABILITE D'UNE EMULSION EAU-HYDROCARBURES**
VERFAHREN ZUR BESTIMMUNG DER STABILITÄT EINER EMULSION VON KOHLENWASSERSTOFFEN UND WASSER
METHOD FOR DETERMINING THE STABILITY OF A WATER-HYDROCARBON EMULSION

(30) Priorité: 27.02.1997 FR 9702366
(43) Date de publication de la demande: 08.12.1999
(73) Titulaire: TotalFinaElf France, 92800 Puteaux (FR)
(72) Inventeur: FAURE, Yan, F-42400 Saint Chamond (FR); LETOFFE, Jean-Marie, F-69150 Décines (FR); SCHULZ, Philippe, F-69110 Sainte Foix Lès Lyon (FR)
(74) Mandataire: Jolly, Jean-Pierre
(86) Numéro de dépôt international: FR9800374
(87) Numéro de publication internationale: WO98038489

(56) Documents cités:
- EP-A- 0 321 350
- EP-A- 0 355 053
- EP-A- 0 533 562
- WO-A-97/36178
- DE-A- 3 505 745
- DE-A- 4 404 309
- US-A- 3 438 248
- US-A- 4 357 244
- US-A- 4 419 879
- US-A- 5 546 792

## Description

La présente invention concerne un procédé de détermination de la stabilité d'une émulsion eau-hydrocarbures.

Ce procédé peut être utilisé pour déterminer la stabilité d'une émulsion eau-hydrocarbures stable à température ambiante, généralement utilisable comme combustible, qui sous l'influence d'une variation de température, refroidissement ou échauffement, est susceptible de se séparer en deux ou plusieurs phases, liquides et/ou solides du fait d'une démixtion ou d'une cristallisation de l'eau suivie ou précédée d'une sédimentation des paraffines au sein de la matrice hydrocarbonée.

Dans la suite de ce texte le terme émulsion ou émulsion eau-hydrocarbures désignera indifféremment une émulsion d'une phase dispersée aqueuse, au sein des hydrocarbures et de leurs éventuels additifs constituant la phase continue ou encore une émulsion d'hydrocarbures dispersés dans une phase aqueuse.

Il est bien connu que la présence d'une petite fraction d'eau dispersée au sein d'un hydrocarbure améliore la qualité de la combustion de cet hydrocarbure et diminue sensiblement la quantité d'émissions nocives, imbrûlés et oxydes d'azote, la vaporisation de l'eau entraînant un abaissement de la température dans la chambre de combustion. Malheureusement, la non miscibilité des deux fluides limite considérablement l'utilisation de cette propriété à sa mise en oeuvre dans des brûleurs préparant in situ l'émulsion. Les tentatives pour réaliser des combustibles et carburants constitués d'une émulsion par addition au mélange de produits tensioactifs ont échoué, leur stabilité étant insuffisante pour une application industrielle. Des travaux récents ont permis la formulation de nouveaux combustibles présentant une stabilité telle que leur exploitation industrielle apparaît possible (voir demande de brevet WO/97/34969 du 17 mars 1997).

Cette application industrielle nécessite la mise au point d'un procédé fiable de contrôle de la stabilité des émulsions ainsi fabriquées, et cela aussi bien dans le temps que sous l'influence de la température.

Le problème est difficile en raison des phénomènes complexes se produisant au sein d'un milieu, par nature hétérogène, notamment lorsqu'il est soumis à des variations de température.

En effet, les hydrocarbures bruts ou raffinés, contiennent une proportion plus ou moins importante de paraffines, qui "à chaud" sont solubles mais qui, sous l'influence d'un abaissement de température, peuvent cristalliser puis sédimenter et ainsi provoquer des dysfonctionnements au stockage ou au cours de leur utilisation. La stabilité de l'émulsion est sensible à la température aussi bien à chaud, une augmentation de température favorisant le phénomène de démixtion, qu'à froid où la cristallisation de l'eau libre accélère le processus de séparation.

Ainsi, la possibilité de prévoir les conditions dans lesquelles une émulsion liquide initialement stable à température ambiante peut se séparer en au moins deux phases sous l'influence du temps et/ou de la température est un atout considérable pour l'utilisation optimale de cette émulsion.

L'émulsion peut être réalisée avec tous les hydrocarbures tels que les essences, les gazoles, les fiouls domestiques, les fiouls lourds, ces combustibles pouvant contenir divers additifs ou composants connus de l'homme de l'art, tels que des composés oxygénés (alcools, éthers, esters méthyliques d'huile végétale).Les mêmes types de problème se posent pour tous les produits particulièrement les produits contenant des paraffines pour lesquels on observe des problèmes de filtration, de pompage et de bouchage notamment dans les moteurs, les chaudières industrielles et domestiques. dans les moteurs, les chaudières industrielles et domestiques. Par analogie, on parlera de formulations d'émulsions d'été ou d'hiver comme on parle souvent, pour les fiouls domestiques, de fioul d'été et d'hiver selon les spécifications en vigueur.

Pour éviter l'apparition du phénomène de démixtion on ajoute au mélange eau-hydrocarbures des additifs tensioactifs facilitant la formation de l'émulsion et assurant sa stabilité. Pour éviter, lors d'une utilisation à froid, la cristallisation puis la sédimentation des paraffines, on ajoute aux émulsions contenant déjà ses propres additifs, des additifs qui ont pour action de retarder l'apparition des cristaux, de prévenir leur développement, de les maintenir en suspension ou d'empêcher leur sédimentation. Il est donc important de mesurer l'impact de ces divers additifs sur les phénomènes de séparation de phase d'une émulsion.

Pour mesurer les caractéristiques d'apparition et de séparation d'une phase solide au sein du liquide, il existe différentes méthodes.

Une première méthode est fondée sur la mesure du poids des solides, tels que les paraffines dans les gazoles ayant cristallisées à une température donnée. Ces paraffines sont extraites de l'hydrocarbure par centrifugation ( brevet EP-O-355 053 A2) ou par agglomération dans un sédimenteur à gravité ( brevet US 4 357 244 ). Ces tests permettent uniquement de connaître la quantité totale de paraffines ayant cristallisé et pouvant sédimenter. Ils donnent une mesure de la sédimentation par excès.

Un second type de test simule la sédimentation en temps réel dans de petites cuves ( norme NF M 07-085 ) où sont stockés des hydrocarbures à basse température pendant 24 ou 48 heures. L'aspect et le volume de chaque phase sont ensuite appréciés visuellement par l'expérimentateur, en particulier la position de l'interface entre les deux phases. Ces tests donnent une mesure qualitative approchée de la sédimentation.

Il existe aussi des méthodes par voie optique pour mesurer les caractéristiques d'apparition de deux phases, liquides non miscibles ou solide-liquide. On peut citer le brevet FR 2 577 319 qui vise la détermination du point de trouble des gazoles et le brevet FR 2 681 428 qui vise la démixtion de deux liquides (mesure du point d'aniline des hydrocarbures).

L'ensemble de ces méthodes présentent des inconvénients et des insuffisances.:
- Elles sont longues puisqu'elles durent en général 24 heures ou 48 heures.
- Elles ne sont pas fiables, car elles dépendent uniquement de la subjectivité de l'observateur.
- Mais surtout, elles ne permettent pas de mesurer les quantités des phases séparées, ni de connaître la vitesse de séparation des phases, ni même d'expliquer et de quantifier les états successifs par lesquels passe le liquide lorsque la température varie.
   Le procédé de détermination de la stabilité d'une émulsion eau-hydrocarbures par analyse thermo-gravimétrique, objet de l'invention, résout le problème de la mesure quantitative de la séparation des phases non miscibles liquides ou solides à partir d'un liquide rendu homogène.
   La présente invention a pour objet un procédé de détermination de la stabilité d'une émulsion eau-hydrocarbures susceptible de présenter une séparation de phase caractérisée en ce que
- dans une première étape on porte la dite émulsion, en la soumettant à un traitement thermique approprié, à une température de test prédéterminée et on mesure en continu par thermogravimétrie, la variation du poids apparent P du détecteur gravimétrique dont une partie est immergée dans l'émulsion, puis,
- dans une deuxième étape, on maintient l'émulsion à cette température en mesurant en continu par thermogravimétrie, la variation du poids apparent dudit détecteur, et on enregistre simultanément la courbe de variation de ce poids, puis,
- on détermine à partir de la dite courbe, d'une part la masse de la phase séparée recueillie et d'autre part la vitesse de séparation des phases correspondant à la pente de cette courbe, principalement la vitesse mesurée au point de rupture correspondant à une augmentation sensible et continue du poids apparent P au début de la deuxième étape, et
- on déduit la stabilité de l'émulsion par comparaison avec des émulsions de référence connues, dont la stabilité dans le temps a été corroborée par des tests de stabilité de longue durée.

On entend ici par température prédéterminée la température de palier à laquelle on veut mesurer la stabilité de l'émulsion mais aussi pour la tenue à froid, la température à laquelle la séparation est visible, c'est-à-dire décelable à l'oeil nu ou par infrarouge comme il est décrit dans les brevets FR 2 577 319 et FR 2 681 428.

Le procédé de l'invention sera mis en oeuvre selon deux variantes principales selon qu'il vise la stabilité à une température prédéterminée supérieure à celle de la cristallisation de l'eau ou, exceptionnellement, de certaines paraffines lourdes (tenue à chaud), ou la stabilité à une température prédéterminée inférieure à une température inférieure à celle de la cristallisation de l'un au moins des constituants (tenue à froid). Les profils des courbes de variation du poids apparent du détecteur en fonction du temps et de la température font apparaître des différences substantielles dans la durée des différentes étapes que l'on suive la stabilité de l'émulsion à chaud ou à froid.

En effet, la stabilité à chaud conduit à une première étape d'une durée liée à la différence de température entre celle de l'émulsion préparée, c'est-à-dire généralement proche de la température ambiante, et celle du palier du test. Si le test est conduit à la température ambiante, cette durée peut être nulle. Si la température du test est supérieure à la température initiale de l'émulsion, celle-ci devra être chauffée. En revanche, la deuxième étape qui s'achève lorsque la variation de poids devient nulle (c'est-à-dire lorsque les phases sont complètement séparées) peut être très longue, notamment si l'on teste une émulsion particulièrement stable. Dans cette hypothèse, la vitesse de séparation sera l'élément prépondérant à prendre en compte.

Pour apprécier la tenue en température des émulsions, la température prédéterminée de test est comprise entre 10 et 70 °C, l'émulsion étant portée à cette température à une vitesse de chauffe ou de refroidissement à partir de l'ambiante généralement comprise entre 0,05 et 10 °C/mn.

La détermination de la stabilité d'une émulsion à basse température consiste à suivre la cristallisation et la sédimentation de l'eau d'une part et des paraffines d'autre part, dans une émulsion.

Dans un premier mode de réalisation, la première étape consiste à abaisser progressivement la température à une vitesse généralement comprise entre 0,05 et 10 °C/mn entre les températures de cristallisation de l'eau et des paraffines tout en enregistrant en continu la variation du poids apparent du détecteur. Celui-ci diminue en raison de l'augmentation de la masse volumique de l'émuision. Lors de la deuxième étape, la température étant maintenue constante, on enregistre l'évolution du poids apparent du détecteur. Ce poids reste sensiblement constant jusqu'à la cristallisation de l'une ou l'autre des deux phases selon que la température de cristallisation de l'eau est inférieure ou supérieure à celle des paraffines.

Dans un deuxième mode, la première étape consiste à abaisser progressivement la température à une vitesse généralement comprise entre 0,05 et 10 °C/mn jusqu'à une température prédéterminée inférieure aux températures de cristallisation des paraffines et de l'eau mais supérieure à la température d'écoulement du mélange hydrocarboné.

Les avantages du procédé, objet de l'invention, sont la précision, la fiabilité et la reproductibilité des résultats obtenus aussi bien pour apprécier la vitesse de séparation des phases que pour mesurer les variations de poids des phases séparées.

Pour mettre en oeuvre le procédé selon l'invention, on utilise un dispositif de mesure de la séparation d'une émulsion en plusieurs phases, liquides et/ou solides, comprenant une balance thermogravimétrique munie d'un détecteur gravimétrique dont la partie immergée dans une cuve(2) contenant la dite émulsion est une nacelle (5), la dite cuve étant reliée à un circuit de refroidissement, le dit dispositif possédant une nacelle libre, de préférence coaxiale avec la cuve dont la section de forme cylindrique est telle que le rapport du plus grand diamètre de la nacelle sur le diamètre de la cuve est compris entre 0,1 et 0,9.

La nacelle a une forme cylindrique comprenant un fond et des rebords dont la hauteur ne dépasse pas le niveau de liquide dans la cuve. La hauteur des rebords est comprise entre 0,5 mm et 30 mm et généralement égale à 5 mm.

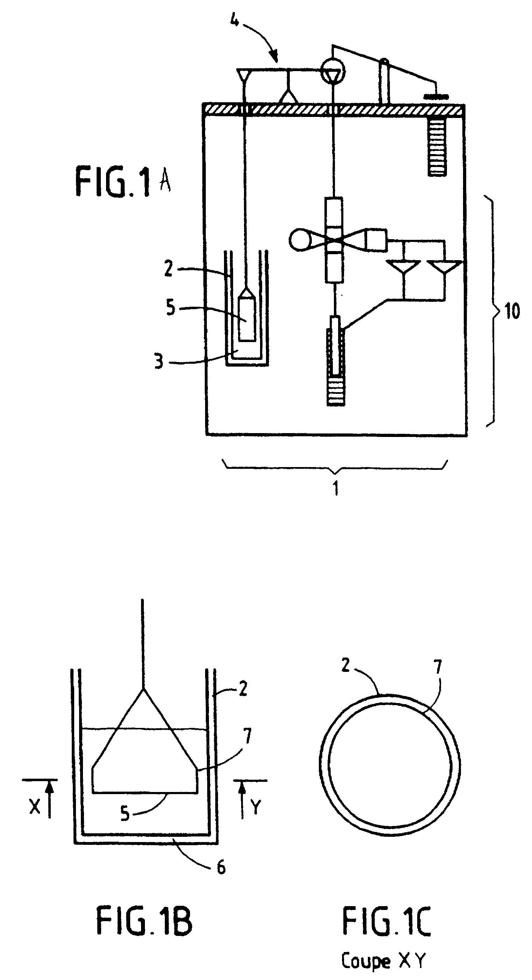

Les caractéristiques du présent dispositif apparaîtront plus clairement à l'examen des figures 1A, 1B et 1C et de leur description ci-après.

Le dispositif, représenté sur la figure 1A, comprend une balance thermogravimétrique (1) à fléau (de type SETARAM), une cuve(2) contenant le mélange liquide macroscopiquement homogène à étudier(3), un appareil de contrôle de la température (non représenté sur le schéma) permettant de refroidir ou réchauffer la cuve et un système informatique (non représenté sur le schéma) d'enregistrement et de traitement des données

Le fléau(4) de la balance(1) porte, suspendue au bras de gauche sur le schéma, une nacelle(5) immergée dans la cuve(2) contenant le mélange. La cuve(2) possède une double enveloppe(6) et permet, grâce à un circuit de chauffe ou de refroidissement, non représenté sur le schéma, de modifier la température du mélange.

La nacelle(5) possède une forme cylindrique, comme la cuve, et comprend un fond et des rebords(7).

Un système optique et magnétique classique (10), associé à la balance, permet de mesurer et d'enregistrer les variations du poids de la nacelle.

Les figures 1B et 1C présentent les détails de la nacelle.

Les figures 2 à 5 présentent, sous forme de courbes, les résultats des mesures obtenus sur divers exemples de séparation de phases.

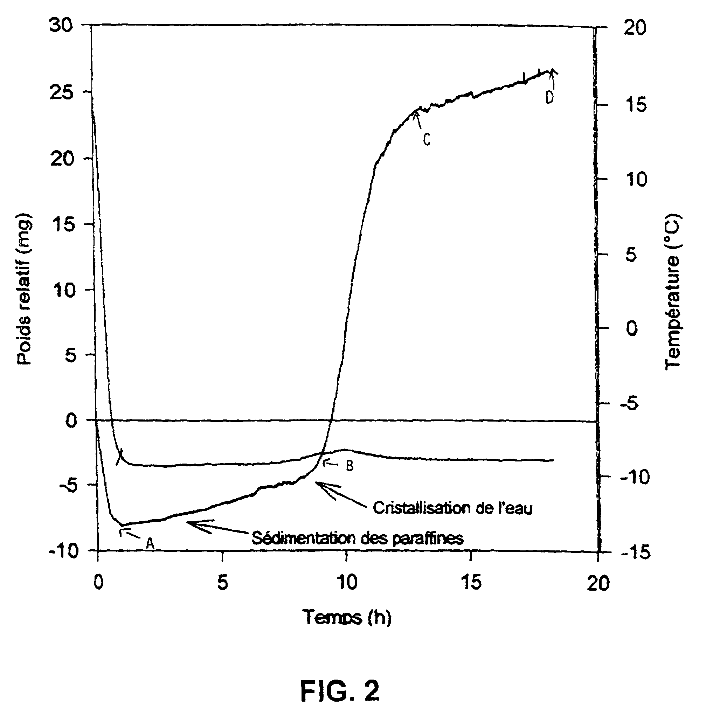

Les caractéristiques et avantages du procédé de la présente invention apparaîtront plus clairement à la lecture des exemples de mise en oeuvre du procédé présentés ci-après, à titre non limitatif, qui se réfèrent aux figures 2 à 5.

### EXEMPLE 1

Le présent exemple décrit la mise en oeuvre du procédé de l'invention à la détermination de la stabilité à froid d'une émulsion eau-gazole, formulation hiver. L'émulsion est amenée à une température inférieure aux températures de cristallisation et de l'eau et des paraffines, mais bien entendu supérieure au point d'écoulement, et on effectue le suivi de la cristallisation et de la sédimentation de l'eau d'une part et des paraffines d'autre part.

Le procédé est mis en oeuvre comme suit :

On utilise une balance thermogravimétrique du type B60 ou TGA 92, à compensation électromagnétique, commercialisée par SETARAM. La nacelle est une soucoupe de 20 mm de diamètre avec des rebords de 5 mm de hauteur. Elle est placée dans un cylindre de 30 mm de diamètre et de 100 mm de hauteur contenant le gazole à tester.

On immerge la nacelle, dans la cuve à 33 mm sous la surface du gazole. On abaisse ensuite la température de l'émulsion jusqu'à - 7,5 °C, à la vitesse de 0,7°C par minute, température à laquelle la formation de cristaux est visible, puis on maintient la cuve à cette température pendant dix huit heures.

Les variations de poids relatif de la nacelle durant la baisse de température et durant le palier de température sont enregistrées. Une diminution du poids relatif de la nacelle est alors observée, due uniquement aux variations de la masse volumique de l'émulsion qui augmente avec la baisse de température, puis une augmentation du poids relatif, due à l'eau et aux paraffines qui sédimentent dans la nacelle.

Le gain Gₚ de poids de la nacelle dû aux paraffines et/ou à l'eau sédimentées est obtenu en soustrayant, à chaque instant, le poids relatif Pₛ du dispositif mesuré au début de la deuxième étape (température constante), au poids P du détecteur mesuré à l'instant t : Gₚ= P-Pₛ. Le gain de poids total est donc la différence du poids apparent du dispositif entre la fin et le début de la deuxième étape.

La courbe enregistrée est celle de la figure 2 :
- La première partie de la courbe s'explique par une perte de poids relatif apparente, due à l'augmentation de la masse volumique du gazole pendant la diminution de la température (OA).
- On observe ensuite un temps de latence où le poids relatif n'augmente que légèrement (AB) du fait de la sédimentation des seules paraffines, l'eau présentant un phénomène de surfusion,
- La troisième partie (BC) traduit une augmentation rapide du poids relatif, correspondant au poids des paraffines et de l'eau se déposant à la surface de la nacelle pendant la phase stationnaire où la température est maintenue à **-7.5°C** ( ± 0,2°C ).
- La quatrième partie (CD), la courbe présente une rupture D à partir de laquelle le gain de poids relatif est dû uniquement à la sédimentation des paraffines. L'eau ayant totalement sédimenté, l'observation visuelle faite à cet instant montre une séparation de phases.
- Une prolongation du test ferait apparaître sur la courbe au delà du point D une rupture à partir de laquelle le gain de poids relatif est nul. Il n'y a alors plus aucune sédimentation sur la nacelle, le poids relatif mesuré demeure sensiblement constant. Dans la pratique ceci n'est pas utile dans la mesure où la précipitation de l'eau libre établit la non stabilité de l'émulsion.

La courbe de sédimentation de la figure 2 permet de définir trois caractéristiques :
1/ Le gain de poids relatif (Gp) en milligrammes qui représente la quantité totale d'eau et de paraffines ayant sédimenté au cours de l'expérience.
2/ La vitesse de sédimentation (V) de l'émulsion en mg par heure, établie par la pente de la courbe dans sa partie BC en son point d'inflexion. Cette vitesse de sédimentation permet donc de comparer différentes émulsions.
3/Le temps de latence en heure qui représente le temps correspondant au palier AB de la courbe, durant lequel l'émulsion reste stable à la température du test.

Dans le cas de l'émulsion testée par la courbe de la figure 2, on peut observer que le temps de latence est de 8 heures.

### EXEMPLE 2

Dans cet exemple, on analyse une autre émulsion de formulation hiver comportant des paraffines cristallisant à plus basse température, par ajout d'additifs spécifiques de tenue à froid, la première étape étant stoppée à - 8,5 °C avant la cristallisation des paraffines, c'est-à-dire au dessus du point de trouble. Seule l'eau cristallise.

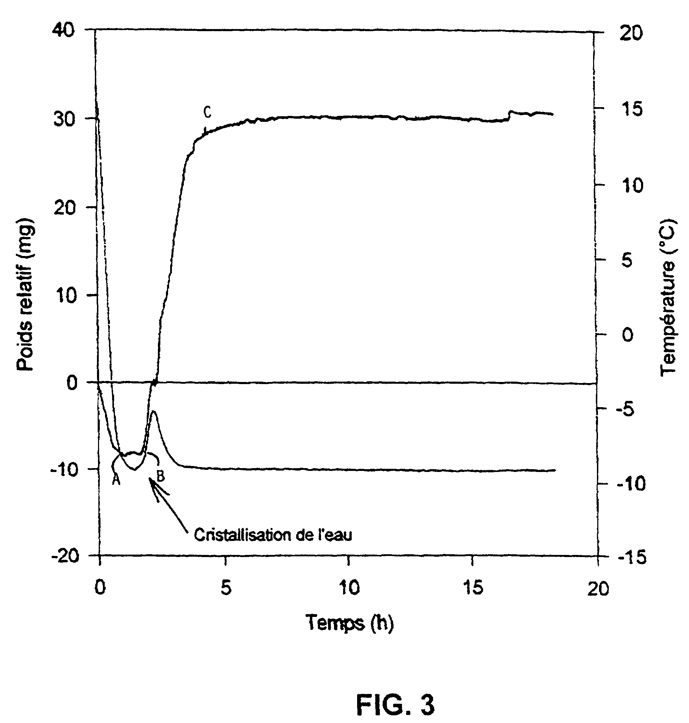

L'enregistrement de la variation de poids a permis l'obtention de la courbe de la figure 3.

On peut observer après l'abaissement du poids relatif de la nacelle (OA), une période de latence (AB) due à la surfusion de l'eau et enfin un gain de poids très rapide (BC) dû à la cristallisation de l'eau. Au delà de C, le gain de poids devient nul, toute l'eau ayant cristallisée. Le profil de température du milieu est caractéristique du phénomène avec le pic dû à la cristallisation exothermique de l'eau.

Le dispositif permet ainsi de distinguer avec précision chacun des événements thermiques vécus par l'émulsion eau-gazole, et de quantifier le niveau de séparation par la mesure des vitesses de sédimentation et du gain de poids apparent.

### EXEMPLE 3

Cet exemple illustre la détermination selon le procédé de l'invention, de la stabilité à température ambiante (20°C) de deux émulsions EMU01 et EMU02 obtenues par mixage de 13% en poids d'eau dans un gazole de type EN590, contenant des additifs spécifiques de maintien en émulsion et dont les distributions granulométriques des gouttelettes d'eau dans le gazole sont très différentes:
- L'émulsion EMU01 possède une distribution granulométrique monodisperse avec des diamètres de gouttes centrés autour de 1 µm (voir photographie 1)
- L'émulsion EMU 02 présente une phase aqueuse moins bien dispersée, dite polydisperse avec des diamètres de gouttes variant de 0.1 µm à 50 µm (voir photographie 2).

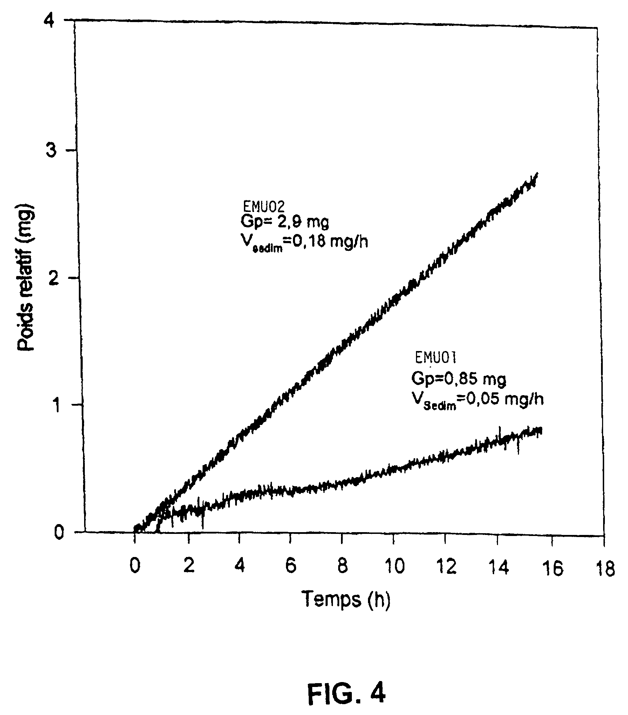

L'enregistrement de l'augmentation de poids apparent a permis d'établir les courbes représentées figure 4. Dans ce cas la température de palier (20°C) est supérieure à la température de cristallisation de l'eau et des paraffines. Une évolution linéraire de l'augmentation de poids relatif avec le temps est obtenue. Les deux paramètres principaux (V et Gp) sont nettement supérieurs pour l'émulsion EMU 02, qui est donc moins stable que l'émulsion EMU 01. L'échantillon EMU 01 présentant une dispersion de l'eau dans la phase continue plus homogène aura moins tendance à floculer et sédimenter. Cet exemple montre clairement qu'il est possible par le procédé selon l'invention d'établir une échelle quantitative de la stabilité des émulsions fabriquées par comparaison à une référence éprouvée et à une température donnée. En outre, l'analyse granulométrique par traitement d'images ne donne qu'une analyse locale, qui, bien qu'éventuellement analysable statistiquement, est longue et délicate, tandis que le procédé selon l'invention permet une analyse globale sur tout le volume de l'échantillon, quelle que soit la température sans avoir à diluer l'échantillon.

### EXEMPLE 4

Cet exemple vise à montrer que le procédé selon l'invention permet de qualifier et d'optimiser un procédé industriel de fabrication d'émulsion. En effet, diverses émulsions ont été préparées industriellement dans une unité à circuit fermé comportant un moulin à émulsion et une prise d'échantillon permettant de faire des prélèvements au bout d'un certain nombre de recirculation ou de passes. On mesure la stabilité de ces échantillons à température ambiante par le procédé selon l'invention dans les conditions décrites dans l'exemple 3, et on la compare à la stabilité d'une émulsion de référence EMU à 13% d'eau appelée ci-après REFERENCE dont la stabilité a été vérifiée sur une longue période. Cette REFERENCE a été préparée au laboratoire de façon à obtenir une distribution granulométrique des gouttelettes d'eau monodisperse centrée autour de 1 µm, cette distribution ayant été analysée par microscopie électronique et traitement d'images.

On introduit dans le circuit fermé de l'unité industrielle une certaine quantité de gazole EN590 et 13 % en poids d'eau rapportée à la quantité de gazole, le mélange étant mis en émulsion (EMU 03).

Des prélèvements d'échantillon ont été effectués après 4 passes et 7 passes de recirculation du mélange. Les émulsions ont été analysées par le procédé selon l'invention. Les gains de poids apparent et les vitesses de sédimentation après 1 heure (V₁) et 6 heures (V₂) ont été mesurés : ils sont rassemblés dans le tableau 1.

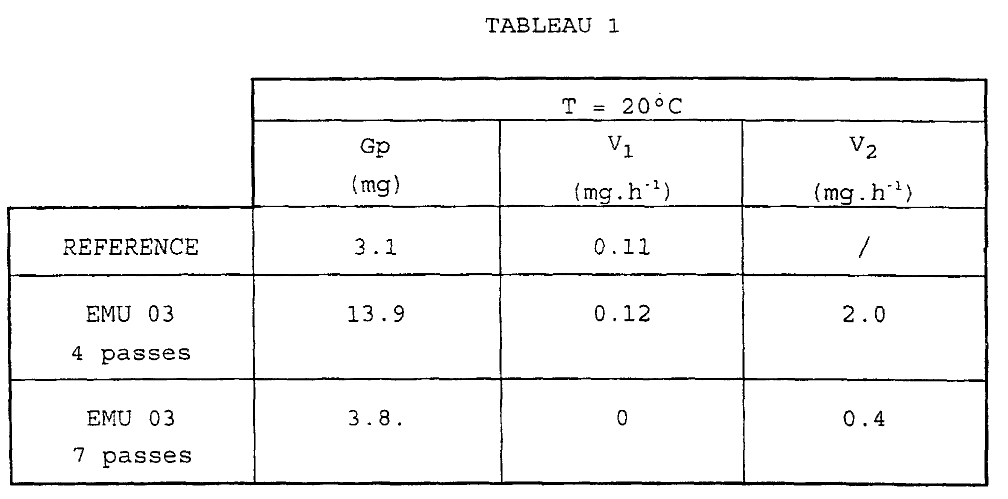

On peut clairement observer qu'il est possible de contrôler la stabilité d'une émulsion pour agir sur le procédé de fabrication afin d'atteindre le niveau de référence.

### EXEMPLE 5

Dans cet exemple, on a étudié la stabilité de deux émulsions EMU04 (formulation été) et EMU05 (formulation hiver) en fonction des températures prédéterminées (entre 40°C et -8 °C) en opérant comme décrit dans les exemples 1 et 3 pour la montée ou la descente en température lors de la première étape du procédé de l'invention. Les résultats obtenus sont rassemblés dans le tableau 2 ci-dessous :

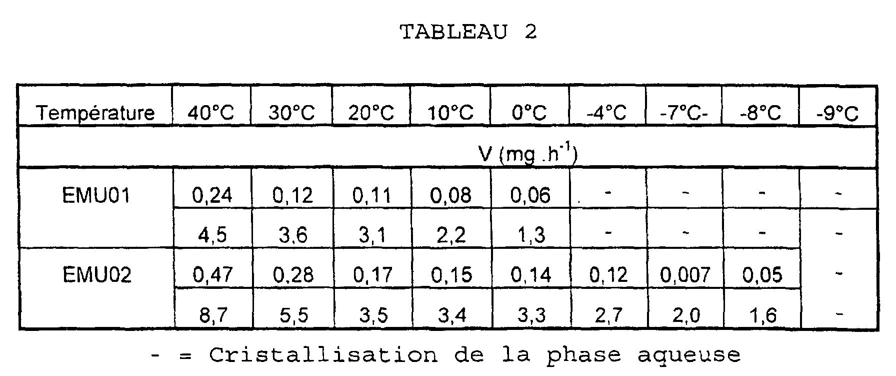

On peut noter que la stabilité de l'émulsion augmente avec l'abaissement de température, jusqu'à la rupture par cristallisation de l'eau et des paraffines.

### EXEMPLE 6

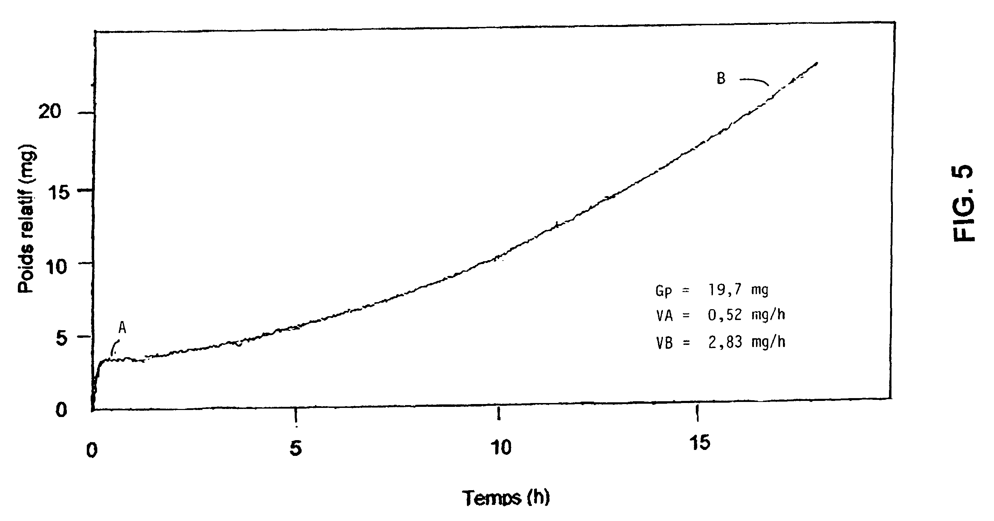

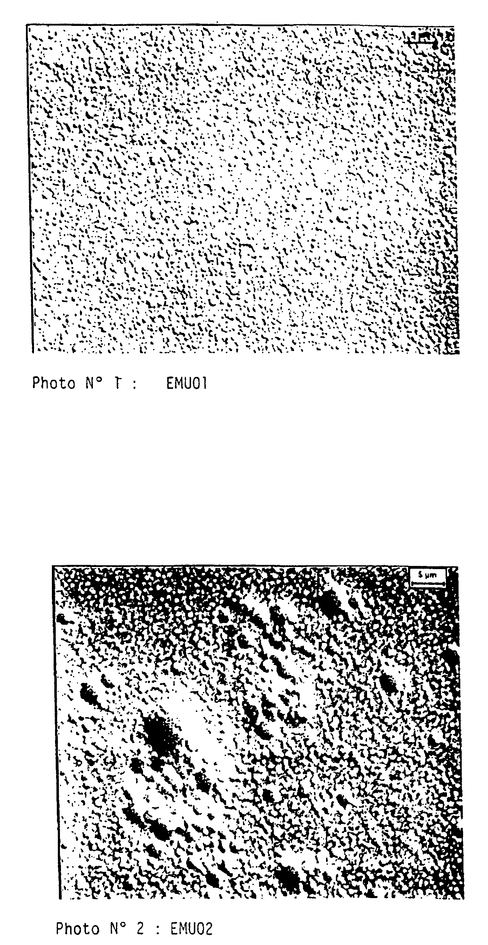

Dans cet exemple, on étudie la stabilité de l'émulsion à une température de 70°C. Au cours de la première étape du procédé, on augmente progressivement la température de l'émulsion, à un rythme de 1°C/mn, jusqu'à atteindre le palier de 70°C. Les mesures effectuées en continu sur le poids apparent de la nacelle permettent d'établir la courbe de la figure 5.

On observe tout d'abord, lors de la première étape, une augmentation sensible du poids du essentiellement à une diminution de la masse volumique de la fraction hydrocarbures de l'émulsion. Ensuite on observe une variation non linéaire (AB uniformément accéléré), du poids relatif due à la démixtion de l'eau entrant dans la composition de l'émulsion, jusqu'à la séparation totale de phase.

## Revendications

1. Procédé de détermination de la stabilité d'une émulsion eau-hydrocarbures susceptible de présenter une séparation de phase **caractérisée en ce que**
• dans une première étape on porte la dite émulsion, en la soumettant à un traitement thermique approprié, à une température de test prédéterminée et on mesure en continu par thermogravimétrie, la variation du poids apparent P du détecteur gravimétrique dont une partie est immergée dans l'émulsion, puis,
• dans une deuxième étape, on maintient l'émulsion à cette température en mesurant en continu par thermogravimétrie, la variation du poids apparent dudit détecteur, et on enregistre simultanément la courbe de variation de ce poids, puis,
• on détermine à partir de la dite courbe, d'une part la masse de la phase séparée recueillie et d'autre part la vitesse de séparation des phases correspondant à la pente de cette courbe, principalement la vitesse mesurée au point de rupture correspondant à une augmentation sensible et continue du poids apparent P au début de la deuxième étape, et
• on déduit la stabilité de l'émulsion par comparaison avec des émulsions de référence connues, dont la stabilité dans le temps a été corroborée par des tests de stabilité de longue durée.

2. Procédé selon la revendication 1, **caractérisé en ce que** la température prédéterminée de test est comprise entre 10 et 70 °C et qùe l'émulsion est portée à cette température à une vitesse de chauffe ou de refroidissement à partir de la température ambiante généralement comprise entre 0,05 et 10 °C/mn.

3. Procédé selon la revendication 1, **caractérisé en ce que** la température prédéterminée de test est comprise entre la température de cristallisation de l'eau et celle des paraffines, la première étant supérieure à la seconde ou inversement, et que l'émulsion est portée à cette température par un refroidissement accéléré à un rythme généralement compris entre 0,05 et 10 °C/mn.

4. Procédé selon la revendication 1, **caractérisé en ce que** la température prédéterminée de test est inférieure aux températures de cristallisation des paraffines et de la phase auqueuse mais supérieure au point d'écoulement du mélange hydrocarboné et que l'émulsion est portée à cette température avec une vitesse de refroidissement comprise entre 0,05 et 10 °C/mn

5. Application du procédé selon les revendications 1 à 4 à la mesure de l'efficacité des additifs favorisant le maintien de l'homogénéité d'une émulsion liquide.

6. Application du procédé selon les revendications 1 à 4 à la mesure de l'efficacité d'un procédé de fabrication d'un combustible émulsionné.

## Patentansprüche

1. Verfahren zur Bestimmung der Stabilität einer wässrigen Kohlenwasserstoff-Emulsion, die zu einer Phasentrennung neigt, **dadurch gekennzeichnet, dass** man
• in einer ersten Stufe die Emulsion auf eine vorbestimmte Testtemperatur bringt, indem man sie einer geeigneten thermischen Behandlung unterwirft, und dass man die Änderungen des scheinbaren Gewichts P des gravimetrischen Detektors, von dem ein Teil in die Emulsion eingetaucht ist, kontinuierlich durch Thermogravimetrie misst, worauf man
• in einer zweiten Stufe die Emulsion auf dieser Temperatur hält, indem man die Änderungen des scheinbaren Gewichts des Detektors kontinuierlich durch Thermogravimetrie misst und dass man gleichzeitig die Änderungskurve dieses Gewichts aufzeichnet, worauf man
• aus dieser Kurve einerseits die Masse der abgetrennten, gewonnenen Phase und andererseits die Geschwindigkeit der Phasentrennung, entsprechend der Steigung dieser Kurve, hauptsächlich die am Brechungspunkt gemessene Geschwindigkeit bestimmt, die einer messbaren und kontinuierlichen Zunahme des scheinbaren Gewichts P zu Beginn der zweiten Stufe entspricht, und dass man
• die Stabilität der Emulsion durch Vergleich mit Emulsionen von bekannten Bezugssubstanzen ableitet, deren zeitliche Stabilität durch langdauernde Stabilitätstest festgestellt wurde.

2. Verfahren nach Anspruch 1, **dadurch gekennzeichnet, dass** die vorbestimmte Testtemperatur zwischen 10 und 70°C liegt und dass die Emulsion mit einer Erhitzungs- oder Abkühlgeschwindigkeit ab der Umgebungstemperatur zwischen 0,05 und 10°C/min auf diese Temperatur gebracht wird.

3. Verfahren nach Anspruch 1, **dadurch gekennzeichnet, dass** die vorbestimmte Testtemperatur zwischen der Kristallisationstemperatur des Wassers und der der Paraffine liegt, wobei die erstere höher als die zweite oder umgekehrt ist, und dass die Emulsion durch eine beschleunigte Abkühlung mit einer Rate von im Allgemeinen zwischen 0,05 und 10°C/min auf diese Temperatur gebracht wird.

4. Verfahren nach Anspruch 1, **dadurch gekennzeichnet, dass** die vorbestimmte Testtemperatur niedriger als die Kristallisationstemperaturen der Paraffine und der wässrigen Phase, aber höher als der Fließpunkt des Kohlenwasserstoffgemisches ist, und dass die Emulsion mit einer Abkühlgeschwindigkeit von 0,05 und 10°C/min auf diese Temperatur gebracht wird.

5. Anwendung des Verfahrens nach den Ansprüchen 1 bis 4, zur Messung der Leistungsfähigkeit von Zusätzen, die die Aufrechterhaltung der Homogenität einer flüssigen Emulsion begünstigen.

6. Anwendung des Verfahrens nach den Ansprüchen 1 bis 4, zur Messung der Leistungsfähigkeit eines Verfahrens zur Herstellung eines emulgierten Brennstoffs.

## Claims

1. A method of determining the stability of a water-hydrocarbon emulsion which can exhibit phase separation, **characterised in that**
• in a first step, said emulsion is brought to a first predetermined test temperature, by subjecting it to a suitable heat treatment, and the variation in the apparent weight P of the gravimetric sensor is measured continuously by thermogravimetry, one part of which sensor is submerged in the emulsion, then
• in a second step, the emulsion is maintained at this temperature by continuously measuring by thermogravimetry the variation in the apparent weight of said sensor, and at the same time the variation curve of this weight is recorded, then
• on the basis of this curve there is determined, on the one hand, the mass of the separated phase collected and, on the other hand, the rate of separation of the phases corresponding to the gradient of this curve, principally the rate measured at the breaking point corresponding to a substantial and continuous increase in the apparent weight P at the start of the second step, and
• the stability of the emulsion is deduced by comparison with known reference emulsions, the stability of which in time has been corroborated by protracted stability tests.

2. A method according to Claim 1, **characterised in that** the predetermined test temperature is between 10 and 70°C, and **in that** the emulsion is brought to this temperature at a rate of heating or cooling starting from the ambient temperature, generally between 0.05 and 10°C/min.

3. A method according to Claim 1, **characterised in that** the predetermined test temperature is between the crystallisation temperature of water and that of paraffins, the first temperature being higher than the second or vice versa, and **in that** the emulsion is brought to this temperature by accelerated cooling at a rate generally between 0.05 and 10°C/min.

4. A method according to Claim 1, **characterised in that** the predetermined test temperature is lower than the crystallisation temperatures of paraffins and of the aqueous phase but higher than the flow point of the hydrocarbon mixture, and **in that** the emulsion is brought to this temperature at a rate of cooling of between 0.05 and 10°C/min.

5. Application of the method according to Claims 1 to 4 to measuring the effectiveness of additives which assist in maintaining the homogeneity of a liquid emulsion.

6. Application of the method according to Claims 1 to 4 to measuring the effectiveness of a production process of an emulsified fuel.
